# EUROPÄISCHE PATENTANMELDUNG

(11) **EP 4 269 821 A1**
(43) Veröffentlichungstag der Anmeldung: **01.11.2023**
(21) Anmeldenummer: 22171054.4
(22) Anmeldetag: 29.04.2022
(51) Int. Cl.: F16B 37/08

(54) **BEFESTIGUNGSSYSTEM ZUM BEFESTIGEN EINES EINBAUELEMENTS AN EINER FUSSBODENSTRUKTUR IN EINEM FAHRZEUG**

(71) Anmelder: Airbus Operations GmbH, 21129 Hamburg (DE)
(72) Erfinder: Benthien, Hermann, 21129 Hamburg (DE); Czudar, Zoltan, 21129 Hamburg (DE); Poppe, Andreas, 21129 Hamburg (DE)

(57) **Zusammenfassung**

Ein Befestigungssystem zum Befestigen eines Einbauelements an einer Fußbodenstruktur in einem Fahrzeug, weist eine längliche Bodenschiene, mindestens eine Aufnahmebuchse, mindestens ein Befestigungselement mit einem Einsteckabschnitt, und einen an dem Einbauelement angeordneten oder damit koppelbaren Auflageabschnitt auf, wobei die Bodenschiene mehrere Aufnahmeöffnungen für die Aufnahmebuchsen aufweist, wobei der Auflageabschnitt mindestens eine Durchgangsbohrung aufweist, wobei die Aufnahmebuchsen jeweils ein erstes Formschlussmittel aufweisen, wobei das mindestens eine Befestigungselement ein mit dem ersten Formschlussmittel komplementäres zweites Formschlussmittel aufweist, wobei die Aufnahmebuchsen in den Aufnahmeöffnungen mit der Bodenschiene verbindbar sind, und wobei das mindestens eine Befestigungselement dazu ausgebildet ist, mit dem Einsteckabschnitt durch die Durchgangsbohrung ragend mit einer der Aufnahmebuchsen durch Einstecken und/oder Rotieren des Einsteckabschnitts in der betreffenden Aufnahmebuche eine formschlüssige Verbindung zwischen dem ersten und dem zweiten Formschlussmittel herzustellen, sodass der Auflageabschnitt mit der Bodenschiene verbunden ist.

## Beschreibung

### Technisches Gebiet

Die Erfindung betrifft ein Befestigungssystem zum Befestigen eines Einbauelements an einer Fußbodenstruktur in einem Fahrzeug, sowie ein Fahrzeug mit einer Fußbodenstruktur und mindestens einem mittels des Befestigungssystems befestigten Einbauelements.

### Technischer Hintergrund

Für die Befestigung von Einbauelementen in einem Fahrzeug, beispielsweise von Passagiersitzen, Kabinenmonumenten und ähnlichem, werden üblicherweise einen Hohlraum umfassende, längliche Schienen eingesetzt, die einen Schlitz aufweisen, der von mehreren Öffnungen durchsetzt ist. Geeignete Befestigungselemente werden durch die Öffnungen in den Hohlraum eingebracht, entlang des Schlitzes in einen zwischen zwei aufeinanderfolgenden Öffnungen gelegenen Abschnitt verschoben und dort mit der Schiene verklemmt. Eine derartige Schiene sowie übliche Befestigungselemente sind für eine raschere Konfiguration einer Fahrzeugkabine jedoch nicht optimal.

Bodenschienen aus einem faserverstärkten Kunststoff mit einem Omega-förmigen Querschnitt weisen Vorteile hinsichtlich des Gewichts auf und sind zudem für ein variables Anbringen von Befestigungselementen günstig.

### Beschreibung

Es ist eine Aufgabe der Erfindung, ein Befestigungssystem zum Befestigen eines Einbauelements an einer derartigen Bodenschiene vorzuschlagen, das eine möglichst rasche Befestigung sowie eine schnelle Umkonfiguration erlaubt.

Die Aufgabe wird gelöst durch ein Befestigungssystem mit den Merkmalen des unabhängigen Anspruchs 1. Vorteilhafte Ausführungsformen und Weiterbildungen sind den Unteransprüchen und der nachfolgenden Beschreibung zu entnehmen.

Es wird ein Befestigungssystem zum Befestigen eines Einbauelements an einer Fußbodenstruktur in einem Fahrzeug vorgeschlagen, aufweisend eine längliche Bodenschiene, mindestens eine Aufnahmebuchse, mindestens ein Befestigungselement mit einem Einsteckabschnitt, und einen an dem Einbauelement angeordneten oder damit koppelbaren Auflageabschnitt, wobei die Bodenschiene mehrere Aufnahmeöffnungen für die Aufnahmebuchsen aufweist, wobei der Auflageabschnitt mindestens eine Durchgangsbohrung aufweist, wobei die Aufnahmebuchsen jeweils ein erstes Formschlussmittel aufweisen, wobei das mindestens eine Befestigungselement ein mit dem ersten Formschlussmittel komplementäres zweites Formschlussmittel aufweist, wobei die Aufnahmebuchsen in den Aufnahmeöffnungen mit der Bodenschiene verbindbar sind, und wobei das mindestens eine Befestigungselement dazu ausgebildet ist, mit dem Einsteckabschnitt durch die Durchgangsbohrung ragend mit einer der Aufnahmebuchsen durch Einstecken und/oder Rotieren des Einsteckabschnitts in der betreffenden Aufnahmebuche eine formschlüssige Verbindung zwischen dem ersten und dem zweiten Formschlussmittel herzustellen, sodass der Auflageabschnitt mit der Bodenschiene verbunden ist.

Die längliche Bodenschiene kann aus einem faserverstärkten Kunststoff ausgeführt sein. Sie könnte einen Omega-förmigen Querschnitt umfassen. Eine obere Begrenzung der Bodenschiene grenzt seitlich an einen in der Kabine ausgebildeten Fußboden an bzw. ist darin integriert. Die obere Begrenzung kann als eine weitgehend ebene Fläche ausgestaltet sein, in der sich die Aufnahmeöffnungen befinden. An der Unterseite der Fläche könnten zwei separate Versteifungsprofile angeordnet sein und ebenfalls entlang der Längserstreckung der Schiene verlaufen. Die Versteifungsprofile könnten beispielsweise jeweils einen L-förmigen Querschnitt mit zwei exemplarisch senkrecht zueinander stehenden Schenkeln umfassen, wobei ein unterer Schenkel in einem Abstand von und parallel zu der Fläche der oberen Begrenzung verläuft und lateral nach außen gerichtet sein kann. Der andere Schenkel verläuft bevorzugt senkrecht zu dem unteren Schenkel und der Fläche der oberen Begrenzung. Beide Versteifungsprofile können voneinander beabstandet und spiegelverkehrt zueinander ausgebildet sein, sodass ein Zwischenraum zwischen den beiden senkrecht verlaufenden Schenkeln der beiden Versteifungsprofile gebildet wird. Dieser Zwischenraum könnte dazu vorgesehen sein, an einem Fußbodenträger, welcher mit einer Rumpfstruktur des Fahrzeugs verbunden ist, befestigt zu werden.

Die Bodenschiene weist mehrere Aufnahmeöffnungen auf, die bevorzugt von einer Oberseite der Bodenschiene zugänglich sind. Die Aufnahmeöffnungen können äquidistant entlang der Längserstreckung der Bodenschiene verteilt sein. Die Aufnahmeöffnungen sind dazu vorgesehen, Aufnahmebuchsen aufzunehmen. Diese können mit den Aufnahmeöffnungen oder weiteren Profilabschnitten der Bodenschiene verbunden werden.

Die Aufnahmebuchsen sind jeweils mit dem mindestens einen Befestigungselement komplementär ausgebildet. Das Befestigungselement ist dazu vorgesehen, selektiv mit einer Aufnahmebuchse eine formschlüssige Verbindung einzugehen. Hierzu weist das Befestigungselement den Einsteckabschnitt und gegebenenfalls einen hieran angrenzenden Schaftabschnitt auf. Das Befestigungselement kann durch eine entsprechende Durchgangsbohrung eines Auflageabschnitts gesteckt werden, sodass das Befestigungselement anschließend hindurchragt. Hierdurch wird eine Fixierung des Auflageabschnitts an dem Befestigungselement erreicht. Das Befestigungselement kann mit einer der Aufnahmebuchsen eine bevorzugt formschlüssige Verbindung eingehen, sodass durch eine Verbindung zwischen der Aufnahmebuchse und der Bodenschiene sowie des Befestigungselements und der Aufnahmebuchse eine Befestigung des Auflageabschnitts an der Bodenschiene erfolgt.

Zum Erreichen einer Verbindung zwischen dem Befestigungselement und der Aufnahmebuchse sind die beiden Formschlussmittel vorgesehen. Das Befestigungselement erlaubt folglich von einer Stelle oberhalb der Bodenschiene das Einbringen und Befestigen eines Einbauelements durch einfaches Einstecken und/oder Rotieren. Für eine schnellere Konfiguration können die Befestigungsmittel ebenso wieder geöffnet, an anderer Stelle platziert und wieder befestigt werden. Das Verschieben des Auflageabschnitts an der Bodenschiene, die eine bevorzugt ebene Oberfläche aufweist, ist besonders einfach. Durch eine einfache Befestigung mittels des mindestens einen Befestigungselements und der Aufnahmebuchse kann insgesamt eine rasche und einfache Rekonfiguration erreicht werden.

In einer vorteilhaften Ausführungsform sind die Aufnahmebuchsen dazu ausgebildet, form- und/oder kraftschlüssig mit den Aufnahmeöffnungen verbunden zu werden. Die Aufnahmebuchsen könnten bereits während der Herstellung der Bodenschiene in den Aufnahmeöffnungen angeordnet und dort befestigt sein. Es ist indes auch denkbar, dass die Aufnahmebuchsen erst bei Bedarf jeweils in eine entsprechende Aufnahmeöffnung gebracht und dort befestigt werden. Das Befestigen könnte durch Verschrauben, Verspannen, Einrasten oder ähnliche Prozesse erfolgen. Werden die Aufnahmebuchsen bereits bei der Herstellung der Bodenschiene eingebracht, könnte es sich zudem anbieten, diese stoffschlüssig mit der Bodenschiene zu verbinden.

In einer vorteilhaften Ausführungsform weisen die Aufnahmebuchsen eine Befestigungsöffnung auf, in der das erste Formschlussmittel in Form von ersten Umfangsrillen angeordnet ist, die in Umfangsrichtung in mehrere erste Segmente unterteilt sind, wobei zwischen den ersten Segmenten freie erste Zwischenräume ohne erste Umfangsrillen vorgesehen sind, wobei der Einsteckabschnitt an einer radial äußeren Oberfläche zweite Umfangsrillen aufweist, die in mehrere zweite Segmente unterteilt sind, wobei zwischen den zweiten Segmenten freie zweite Zwischenräume ohne zweite Umfangsrillen vorgesehen sind, und wobei die zweiten Segmente dazu dimensioniert sind, axial in die ersten Zwischenräume gesteckt zu werden, um nach anschließender Rotation des Befestigungselements mit den ersten Segmenten eine formschlüssige Verbindung einzugehen. Der Einsteckabschnitt kann demzufolge in einer ersten rotatorischen Relativposition zu der Aufnahmebuchse platziert und axial direkt in die Aufnahmebuchse eingesteckt werden. Durch anschließendes Verdrehen des Befestigungselements in eine zweite rotatorische Relativposition kämmen die ersten Umfangsrillen mit den zweiten Umfangsrillen und bilden folglich eine formschlüssige Verbindung aus. Die ersten und zweiten Umfangsrillen können als in Umfangsrichtung unterbrochene Gewinde verstanden werden. Die Steigung der Gewinde könnte Null sein oder wie für übliche, selbsthemmende Schraubverbindungen einen Winkel von wenigen Grad aufweisen. Die Verbindung zwischen dem Befestigungselement und der Aufnahmebuchse ist dadurch sehr rasch durchführbar. Zudem kann eine Einstecktiefe sehr einfach eingestellt und gehalten werden, sodass für unterschiedlich dicke Auflageabschnitte und andere Randbedingungen durch Einstecken des Einsteckabschnitts stets eine geeignete Einstecktiefe erreicht und fixiert wird. Es erfolgt dadurch eine sehr flexible Kompensation unterschiedlicher Anschlussmaße.

In einer vorteilhaften Ausführungsform umfassen die mehreren ersten Segmente und die mehreren zweiten Segmente jeweils zwei, drei oder mehr erste bzw. zweite Segmente. Bei zwei Segmenten liegen diese bevorzugt direkt einander gegenüber. Die jeweiligen Segmente und die Zwischenräume können symmetrisch zueinander ausgeführt und verteilt sein, sodass sich sowohl die einzelnen Segmente, als auch die einzelnen Zwischenräume über einen Winkel von jeweils im Wesentlichen 90° erstrecken. Die Größe der ersten Zwischenräume ist an die Größe der zweiten Segmente anzupassen und umgekehrt. Die zweiten Segmente könnten sich über einen geringeren Umfangswinkel erstrecken als die ersten Segmente oder umgekehrt. Die ersten Segmente und die zweiten Segmente können weiterhin gleich ausgestaltet sein, sodass die Zwischenräume zum Erleichtern des Einführens des Einsteckabschnitts etwas größer sind als die ersten bzw. zweiten Segmente.

In einer vorteilhaften Ausführungsform weisen die ersten Umfangsrillen und die zweiten Umfangsrillen keine Steigung auf. Beim Verbinden des Befestigungselements mit der Aufnahmebuchse wird folglich die ursprünglich erreichte Einstecktiefe auch bei der anschließenden Rotation beibehalten. Beim Verbinden der zweiten Umfangsrillen des Befestigungselements mit den ersten Umfangsrillen der Aufnahmebuchse erfolgt keine axiale Relativbewegung des Befestigungselements in der Aufnahmebuchse. Wie vorangehend dargestellt könnte als Alternative auch eine geringe Steigung vorgesehen sein, bei der eine Selbsthemmung zu erwarten ist und der Auflageabschnitt leicht mit der Bodenschiene verspannt wird.

In einer vorteilhaften Ausführungsform weist das Befestigungselement einen von dem Einsteckabschnitt beabstandeten Kragen auf, der flächig mit dem Auflageabschnitt in Kontakt bringbar ist. Durch den Kragen wird ein etwa ringförmiger, flächiger Kontakt zwischen dem Befestigungselement und einer Randfläche um eine Durchgangsbohrung des Auflageabschnitts hergestellt. Dies erlaubt eine Kraftübertragung von dem Auflageabschnitt in das Befestigungselement und folglich in die Aufnahmebuchse sowie die Bodenschiene.

In einer vorteilhaften Ausführungsform ist der Auflageabschnitt an einem Beschlag angeordnet, der mit dem Einbauelement verbindbar ist. Der Beschlag könnte neben dem Auflageabschnitt als eine flächige Komponente weitere flächige Komponenten umfassen. Diese könnten sich quer zu dem Auflageabschnitt erstrecken und Öffnungen bzw. Ösen, Gabeln oder dergleichen umfassen, die für eine mechanische Verbindung mit einem Einbauelement konzipiert sind.

In einer vorteilhaften Ausführungsform weist das Befestigungssystem ferner mindestens ein fluiddichtes, elastisches Abdeckelement auf, das auf Aufnahmebuchsen und/oder Aufnahmeöffnungen aufbringbar ist, die frei von Befestigungselementen sind. Benachbarte Aufnahmebuchsen und/oder Aufnahmeöffnungen sind damit insbesondere flüssigkeitsdicht abdeckbar, sodass etwa auf den Fußboden verschüttete Flüssigkeiten nicht in eine freie Aufnahmeöffnung geraten können. Es ist weiterhin denkbar, dass ein solches Abdeckelement zusammen mit dem Auflageabschnitt gemeinsam von einem Teppich oder anderen Bodenbelag abgedeckt wird.

In einer vorteilhaften Ausführungsform ist die Aufnahmebuche eine Spreizbuchse, die sich durch Einstecken des Befestigungselements in eine Einstecköffnung aufweitet und in einem vollständig aufgeweiteten Zustand mit dem Befestigungselement verrastet. Die Aufnahmebuchse wird folglich erst beim Befestigen des Befestigungselements in eine entsprechende Aufnahmeöffnung eingeführt. Das Befestigen der Aufnahmebuchse kann beim Verbinden des Befestigungselements erfolgen. Zum Erleichtern des Anordnens des Befestigungselements und der Aufnahmebuchse in der Bodenschiene könnte vorgesehen sein, dass das Befestigungselement teilweise in der Aufnahmeöffnung steckt, sodass sich die Aufnahmebuchse und das Befestigungselement gegenseitig halten. Die hieraus resultierende Baugruppe mit einer Aufnahmebuchse und einem Befestigungselement kann dann von oben in eine Aufnahmeöffnung der Bodenschiene eingeführt und durch entsprechendes Handhaben des Befestigungselements miteinander und mit der Aufnahmeöffnung der Bodenschiene verrastet bzw. arretiert werden.

In einer vorteilhaften Ausführungsform weist die Aufnahmebuchse mehrere Umfangssegmente mit jeweils einem freien Ende auf, wobei die freien Enden von der Einstecköffnung beabstandet sind, und wobei die freien Enden jeweils einen radial nach außen ragenden Vorsprung aufweisen, der bei in einer Aufnahmeöffnung eingesteckter Aufnahmebuchse bei eingestecktem Befestigungselement mit einer korrespondierenden Fläche der Bodenschiene in Kontakt gerät, sodass die Aufnahmebuchse in der Aufnahmeöffnung gehalten wird. Das Verrasten führt etwa dazu, dass eine Aufnahmeöffnung von einem oder mehreren Vorsprüngen der Umfangsegmente und einem zu dem Befestigungselement weisenden Kragen eingeschlossen wird. Die Vorsprünge an den freien Enden werden erst durch Befestigen des Befestigungselements radial nach außen ausgelenkt, sodass dort der flächige Kontakt mit der Bodenschiene entsteht.

In einer vorteilhaften Ausführungsform weist das mindestens eine Befestigungselement eine Öse zum Verzurren von Ladung auf. Diese kann in einem Frachtraum vorgesehen sein, um dort Ladung zu sichern. Die Öse kann feststehend oder klappbar ausgebildet sein.

Das Befestigungselement kann ferner auch als Schraubverbinder mit hoher Gewindesteigung realisiert sein. Die Aufnahmebuchse weist dann ein entsprechendes erstes Formschlussmittel in Form eines Gewindes auf Basis einer Schnellverschlussmutter ("quick release nut" oder "speed nut") auf, an das das zweite Formschlussmittel in Form eines Außengewindes des Befestigungselements angepasst ist. Das Befestigungselement führt eine Vorspannung aus. Es können Rast- oder Verriegelungsmittel vorgesehen sein, die ein Lösen des Befestigungselements verhindern. Die Gewinde können zudem auch selbsthemmend mit einer geringeren Steigung ausgebildet sein.

Das mindestens eine Befestigungselement kann weiterhin durch ein Sicherungselement vor dem Verdrehen gesichert sein. Hierzu sind unterschiedliche Varianten denkbar. Es könnte sich beispielsweise anbieten, das mindestens eine Befestigungselement mit einem profilierten Kopf auszustatten, beispielsweise einem Schlüsselprofil, einem Vielzahn oder ähnlichen, nicht kreisrunden Profilen. Nach Installation des betreffenden Befestigungselements kann ein komplementär geformtes Sicherungselement in Kontakt mit dem profilierten Kopf gebracht werden, um das Verdrehen zu verhindern. Es ist denkbar, bei Verwendung eines Beschlags, der an der Bodenschiene zu befestigen ist, ein geeignet geformtes Sicherungselement in einen Zwischenraum zwischen den profilierten Kopf und eine abstehende Fläche des Beschlags zu bringen. Das Sicherungselement könnte in einem besonders einfachen Fall als längliches U-Profil ausgeführt sein, dessen Schenkel mehrere hintereinander angeordnete Befestigungselemente umschließen und auf diese Weise sichern. Das Sicherungselement kann so geformt sein, dass ein Bolzen, der durch einen an der Bodenschiene zu befestigenden Beschlag gebracht wird, das Sicherungselement überdeckt und damit zusätzlich fixiert. Es sind jegliche vorangehend genannten Ausführungsformen mit einem derartigen Sicherungselement ausstattbar.

Die Erfindung betrifft ferner ein Flugzeug, aufweisend einen Rumpf, eine darin ausgebildete Passagierkabine mit einem Fußboden und mindestens einem Befestigungssystem nach einem der vorhergehenden Ansprüche.

Das Einbauelement könnte ein Passagiersitz, eine Passagiersitzgruppe, ein Kabinenmonument, eine Trennwand, und/oder ein Flugbegleitersitz sein. Jegliche anderen denkbaren Einbauelemente können jedoch mit diesem Befestigungssystem befestigt werden.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Schnittdarstellung einer Bodenschiene mit einem Beschlag und mehreren Befestigungselementen.
- Fig. 2: eine schematische Darstellung einer Bodenschiene und mehrerer Aufnahmebuchsen.
- Fig. 3: eine schematische Darstellung einer Bodenschiene mit mehreren eingesetzten Aufnahmebuchsen.
- Fig. 4: eine schematische Darstellung einer Bodenschiene mit mehreren eingesetzten Aufnahmebuchsen, einem darauf angeordneten Beschlag und mehreren Befestigungselementen.
- Fig. 5: eine schematische Darstellung einer Bodenschiene mit mehreren Aufnahmebuchsen, einem darauf angeordneten Beschlag und mehreren eingesetzten Befestigungselementen.
- Fig. 6: eine schematische Darstellung einer Bodenschiene mit mehreren Aufnahmebuchsen, einem darauf angeordneten Beschlag, mehreren Befestigungselementen, einem Fußbodenbelag und Abdeckelementen.
- Fig. 7: eine schematische Schnittdarstellung der Anordnung aus Fig. 6 mit einer anderen Schnittebene.
- Fig. 8: eine schematische Schnittdarstellung einer modifizierten Variante der Ausführungsform aus Fig. 7.
- Fig. 9: eine weitere schematische Schnittdarstellung.
- Fig. 10a und 10b: schematische Darstellungen eines Ausführungsbeispiels mit einer Spreizbuchse.
- Fig. 11a und 11b: schematische Schnittdarstellungen eines weiteren Ausführungsbeispiels.
- Fig. 12: ein Flugzeug.

### Detaillierte Beschreibung von Ausführungsbeispielen

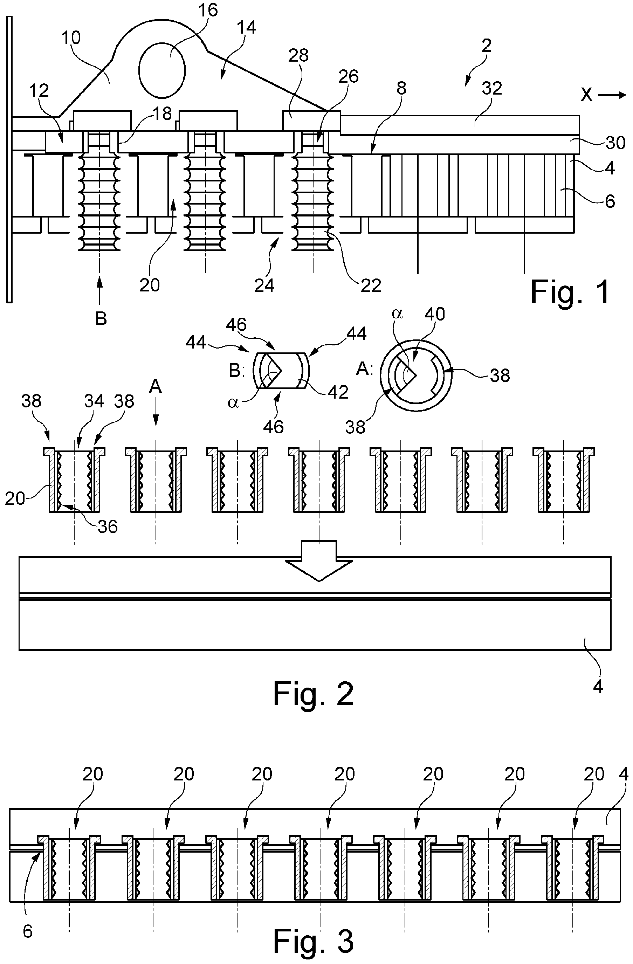

Fig. 1 zeigt ein Befestigungssystem 2 in einer schematischen, lateralen Schnittdarstellung. Hier ist eine längliche Bodenschiene 4 gezeigt, die mehrere, voneinander beabstandete Aufnahmeöffnungen 6 aufweist. Die Bodenschiene 4 könnte beispielsweise in einer Passagierkabine eines Flugzeugs integrierbar sein und sich dann parallel zu einer Längsachse x des Flugzeugs erstrecken. Die Bodenschiene 4 weist eine Oberseite 8 auf, auf der ein Beschlag 10 angeordnet ist. Dieser weist einen Auflageabschnitt 12 auf, welcher flächig auf der Oberseite 8 aufliegt. Ein Halteschenkel 14 erstreckt sich vertikal hierzu in eine von der Bodenschiene 4 abgewandte Richtung und weist eine Öse 16 zum Aufnehmen eines Bolzens oder ähnliches zum Befestigen eines Einbauelements auf.

Der Auflageabschnitt 12 weist mehrere Durchgangsbohrungen 18 auf, die hier in Fluchtung mit mehreren Aufnahmeöffnungen 6 der Bodenschiene 6 liegen. Aufnahmebuchsen 20, welche anhand der Fig. 2-6 näher erläutert werden, sind in den Aufnahmeöffnungen 6 angeordnet und können eine formschlüssige Verbindung mit Befestigungselementen 22 eingehen.

Die Befestigungselemente 22 weisen einen Einsteckabschnitt 24 auf, der durch die Durchgangsbohrungen 18 in die Aufnahmeöffnungen 6 und damit in die Aufnahmebuchsen 20 ragen. Die Befestigungselemente 22 weisen ferner einen an den Einsteckabschnitt 24 angrenzenden Schaftabschnitt 26 auf, an den sich ein Kragen 28 anschließt. Dieser liegt bündig auf einer die Durchgangsbohrung 18 umgebenden Fläche des Auflageabschnitts 12 auf. Durch eine Verbindung zwischen den Befestigungselementen 22 und einer Aufnahmebuchse 20 erfolgt eine Verbindung des Beschlags 10 mit der Bodenschiene 4.

Entlang der Längserstreckung angrenzend ist jeweils ein fluiddichtes, elastisches Abdeckelement 30 vorgesehen, das auf Aufnahmeöffnungen 6 aufliegt. Es könnte aus einem gummiartigen Material bestehen und in seiner Dicke an eine Dicke des Auflageabschnitts 12 angepasst sein. Auf dem Auflageabschnitt 12 und dem Abdeckelement 30 liegt ein Bodenbelag 32 in Form eines Teppichs oder dergleichen auf. Durch das Abdeckelement 30 werden die Aufnahmeöffnungen 6 vor Verschmutzung geschützt und es wird eine harmonische, stufenlose Abdeckung von der Bodenschiene 4 mit den Aufnahmeöffnungen 6 erreicht.

Fig. 2 zeigt die Bodenschiene 4 in einer Seitenansicht, sowie mehrere Aufnahmebuchsen 20 jeweils in einem seitlichen Schnitt. Die Aufnahmebuchsen 20 weisen jeweils eine Befestigungsöffnung 34 auf, in der erste Formschlussmittel 36 in Form von ersten Umfangsrillen angeordnet sind. Diese sind in Umfangsrichtung in mehrere erste Segmente 38 unterteilt, wie in einer Detailansicht A gezeigt. Die exemplarisch zwei ersten Segmente 38 erstrecken sich jeweils über einen Winkel α von im Wesentlichen 90° in Umfangsrichtung. Ein korrespondierend geformtes Befestigungselement 22 kann in einer ersten Relativposition direkt in die Befestigungsöffnung 34 eingesteckt werden, um durch Verdrehen um ebenfalls etwa 90° eine formschlüssige Verbindung mit den ersten Formschlussmitteln 36 herzustellen. Zwischen den ersten Segmenten 38 sind zum Ermöglichen des Einsteckens von Befestigungselementen 22 freie erste Zwischenräume 40 ohne erste Umfangsrillen 36 vorgesehen.

In einer Detailansicht B (siehe Fig. 1) ist ein Befestigungselement 22 gezeigt, welches zweite Formschlussmittel in Form von zweiten Umfangsrillen 42 aufweist. Diese erstrecken sich ebenfalls über einen Winkel α von im Wesentlichen 90°. Hier sind zwei zweite Segmente 44 vorgesehen, die so ausgestaltet sind, dass das Befestigungselement 22 über die ersten Zwischenräume 40 in die Aufnahmebuchse 20 gesteckt werden kann. Freie zweite Zwischenräume 46 ohne weitere Umfangsrillen sind analog zu den ersten Zwischenräumen 40 entsprechend vorgesehen.

Durch Einstecken des Befestigungselements 22 in eine Aufnahmebuchse 20 kann eine rasche Verbindung mit der betreffenden Aufnahmebuchse 20 erreicht werden. Gleichzeitig ist eine von dem Befestigungselement 22 vorgesehene Einstecktiefe beim Verdrehen des Befestigungselements 22 unmittelbar fixiert.

Fig. 2 und 3 zeigen das Einbringen der Aufnahmebuchsen 20 in die Bodenschiene 4, beispielsweise durch Einpressen, Verschrauben, Verschweißen oder andere Arten von Befestigungsprozessen.

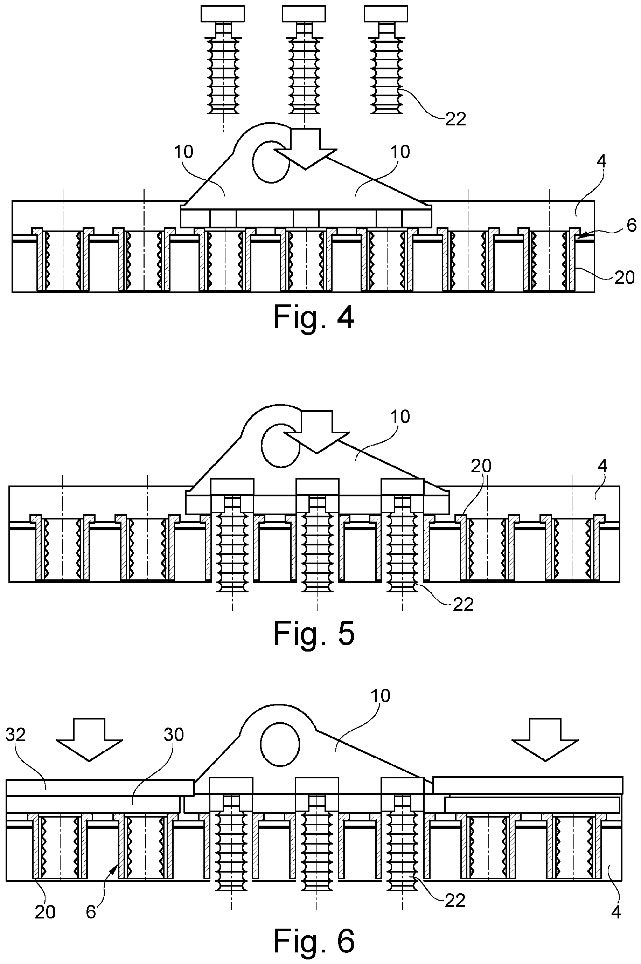

Fig. 4 zeigt das Platzieren des Beschlags 10, während Fig. 5 das Einstecken der Befestigungselemente 22 in die Aufnahmebuchsen 20 darstellt. Nach einer Rotation der Befestigungselemente 22 um ihre Längsachse werden die Abdeckelemente 30 und der Bodenbelag 32 angebracht.

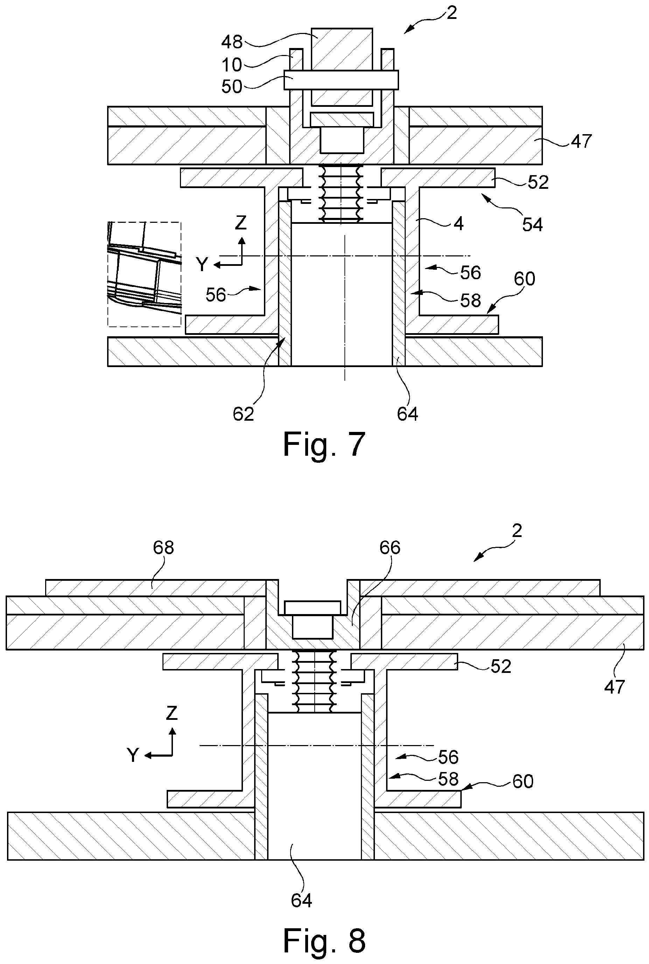

Fig. 7 zeigt das Befestigungssystem 2 in einer anderen Schnittdarstellung, bei der die Schnittebene in der Z-Y-Ebene verläuft. Ein Fußboden 47 als untere Begrenzung einer Passagierkabine ist gezeigt, in dem die Bodenschiene 4 verläuft. Hier ist weiterhin ein Sitzbein 48 als Einbauelement dargestellt, das mit einem Bolzen 50 an dem Beschlag 10 angeordnet ist. Die Bodenschiene 4 ist hier als eine Omega-förmige Schiene gezeigt, die eine obere Fläche 52 umfasst, an dessen Unterseite 54 sich zwei L-förmige Profile 56 anschließen, welche voneinander beabstandet und spiegelverkehrt zueinander ausgerichtet sind. Ein vertikaler Schenkel 58 erstreckt sich vertikal zu der oberen Fläche 52, während waagerechte Schenkel 60 parallel dazu verlaufen und nach außen gerichtet sind. Dadurch wird ein Zwischenraum 62 zwischen den Profilen 56 gebildet, der zur Befestigung an einem Fußbodenträger 64 oder ein ähnliches Element angepasst ist.

In Fig. 8 ist das Befestigungssystem 2 gezeigt, bei dem ein Auflageabschnitt 66 als ein Teil eines Kabinenmonuments ausgeführt und mit einem Monumentengehäuse 68 verbunden ist.

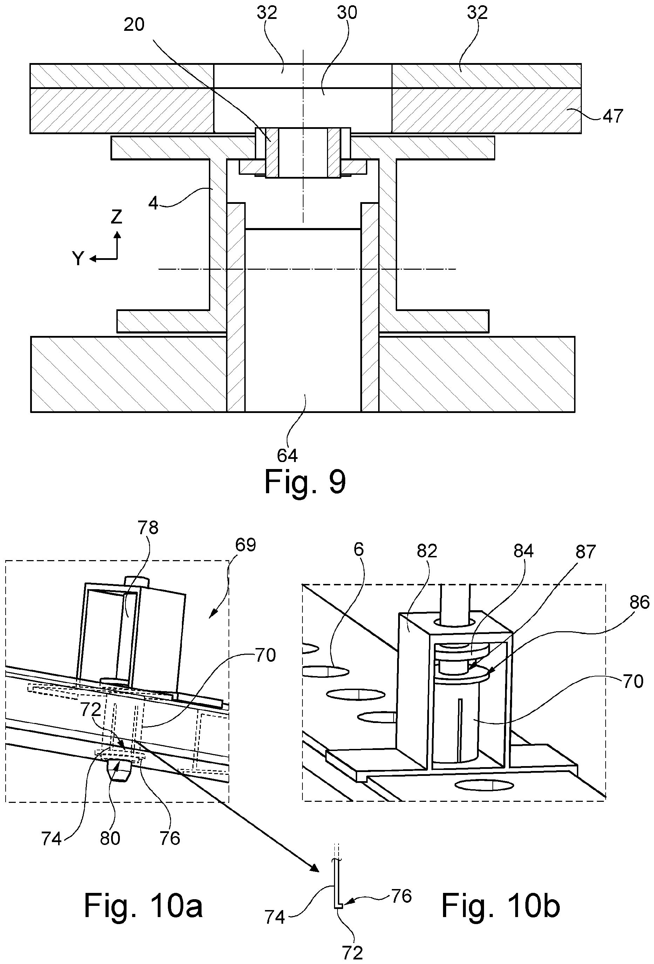

Fig. 9 zeigt ein Detail des Abdeckelements 30 zwischen einzelnen Befestigungselementen 22.

Die Fig. 10a und 10b zeigen ein Befestigungssystem 69 mit einer abweichend konstruierten Aufnahmebuchse 70, die als eine Spreizbuchse ausgeführt ist. Diese weist mehrere Umfangsegmente 74 auf, wobei jedes Umfangssegment 74 ein freies Ende 76 mit einem daran angeordneten Vorsprung 72 aufweist. Die Aufnahmebuchse 70 kann in eine der Aufnahmeöffnungen 6 gesteckt werden, wobei erst durch Befestigung eines korrespondierenden Befestigungselements 78 eine Verbindung zwischen der Aufnahmebuchse 70 und der Aufnahmeöffnung 6 erfolgt. Hierzu kann das Befestigungselement 78 beispielsweise einen Rastkörper 80 umfassen, der von außen mit den Vorsprüngen 72 verrastet.

Fig. 10b zeigt die Kombination aus Befestigungselement 78 und Aufnahmebuchse 70 an einem Beschlag 82. Das Befestigungselement 78 wird hier in eine Einstecköffnung 87 der Spreizbuchse 70 eingesteckt. Das Befestigungselement 78 weist einen umlaufenden Kragen 84 auf, der mit einer Oberseite 86 der Aufnahmebuchse 70 in Anschlag bringbar ist, wenn die Aufnahmebuchse 70 vollständig in der entsprechenden Aufnahmeöffnung 6 angeordnet ist. In diesem Zustand sind die Spreizbuchse 70 und das Befestigungselement 78 vollständig fixiert

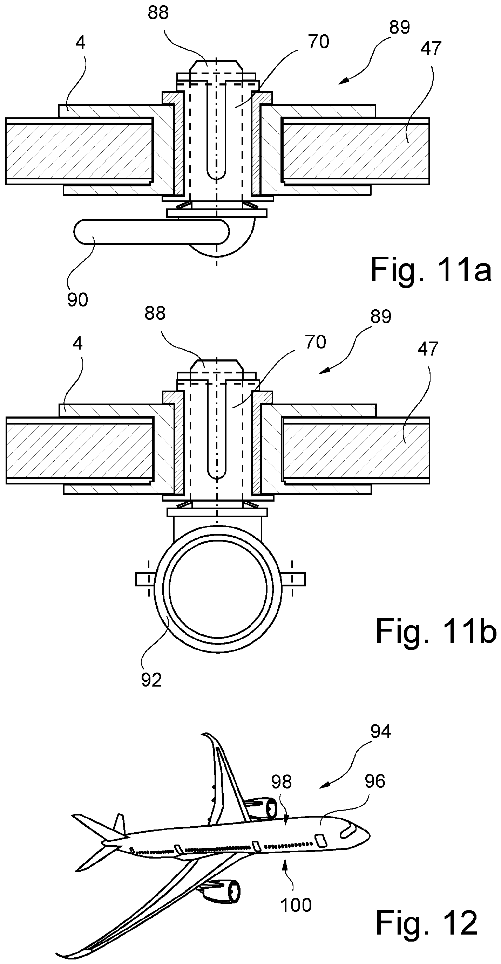

Fig. 11a und 11b zeigen ein Befestigungssystem 89. Hier ist die in Fig. 10a und 10b gezeigte Spreizbuchse 70 in der Bodenschiene 4 angeordnet, wobei analog zu dem Befestigungselement 78 aus den genannten vorherigen Darstellungen ein Befestigungselement 88 vorgesehen ist, das in die Spreizbuchse 70 steckbar ist. Das Befestigungselement 88 weist eine klappbare Öse 90 bzw. eine feststehende Öse 92 auf, die zum Verzurren von Ladung in einem Frachtraum nutzbar ist. Die Bodenschiene 4 ist hier exemplarisch an dem oberhalb eines Frachtraums befindlichen Fußboden 47 vorgesehen und das Befestigungselement 89 wird von unten gesteckt. Das Element 47 kann auch eine Wandverkleidung und/oder obere Verkleidung eines Frachtraums sein und die Bodenschiene 4 an einer oberen Begrenzung des Frachtraums an einer Fußbodenstruktur befestigt sein. Dieses Ausführungsbeispiel kann mit allen vorher gezeigten Ausführungsbeispielen kombiniert werden.

Fig. 12 zeigt schließlich ein Flugzeug 94, das einen Rumpf 96 mit einer darin ausgebildeten Passagierkabine 98 umfasst, in der ein Fußboden 47 vorgesehen ist. In der Passagierkabine 98 oder einem darunterliegenden Frachtraum 100 kann das Befestigungssystem 2 eingesetzt werden.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 2: Befestigungssystem
- 4: Bodenschiene
- 6: Aufnahmeöffnung
- 8: Oberseite
- 10: Beschlag
- 12: Auflageabschnitt
- 14: Halteschenkel
- 16: Öse
- 18: Durchgangsbohrung
- 20: Aufnahmebuchse
- 22: Befestigungselement
- 24: Einsteckabschnitt
- 26: Schaftabschnitt
- 28: Kragen
- 30: Abdeckelement
- 32: Bodenbelag
- 34: Befestigungsöffnung
- 36: erstes Formschlussmittel / erste Umfangsrillen
- 38: erstes Segment
- 40: erster Zwischenraum
- 42: zweites Formschlussmittel / zweite Umfangsrillen
- 44: zweites Segment
- 46: zweiter Zwischenraum
- 47: Fußboden
- 48: Sitzbein / Einbauelement
- 50: Bolzen
- 52: obere Fläche
- 54: Unterseite
- 56: L-förmiges Profil
- 58: vertikaler Schenkel
- 60: waagerechter Schenkel
- 62: Zwischenraum
- 64: Fußbodenträger
- 66: Auflageabschnitt
- 68: Monumentengehäuse / Einbauelement
- 69: Befestigungssystem
- 70: Aufnahmebuchse / Spreizbuchse
- 72: Vorsprung
- 74: Umfangsegment
- 76: freies Ende
- 78: Befestigungselement
- 80: Rastkörper
- 82: Beschlag
- 84: umlaufender Kragen
- 86: Oberseite
- 87: Einstecköffnung
- 88: Befestigungselement
- 89: Befestigungssystem
- 90: klappbare Öse
- 92: feststehende Öse
- 94: Flugzeug
- 96: Rumpf
- 98: Passagierkabine
- 100: Frachtraum

## Patentansprüche

1. Befestigungssystem (2, 69, 89) zum Befestigen eines Einbauelements (48, 68) an einer Fußbodenstruktur in einem Fahrzeug, aufweisend:
eine längliche Bodenschiene (4),
mindestens eine Aufnahmebuchse (20, 70),
mindestens ein Befestigungselement (22) mit einem Einsteckabschnitt (24), und
einen an dem Einbauelement (48, 68) angeordneten oder damit koppelbaren Auflageabschnitt (12, 66),
wobei die Bodenschiene (4) mehrere Aufnahmeöffnungen (6) für die Aufnahmebuchsen (20, 70) aufweist,
wobei der Auflageabschnitt (12, 66) mindestens eine Durchgangsbohrung (18) aufweist,
wobei die Aufnahmebuchsen (20, 70) jeweils ein erstes Formschlussmittel (36) aufweisen,
wobei das mindestens eine Befestigungselement (22, 78, 88) ein mit dem ersten Formschlussmittel (36) komplementäres zweites Formschlussmittel (42) aufweist,
wobei die Aufnahmebuchsen (20, 70) in den Aufnahmeöffnungen (6) mit der Bodenschiene (4) verbindbar sind,
wobei das mindestens eine Befestigungselement (22, 78, 88) dazu ausgebildet ist, mit dem Einsteckabschnitt (24) durch die Durchgangsbohrung (18) ragend mit einer der Aufnahmebuchsen (20, 70) durch Einstecken und/oder Rotieren des Einsteckabschnitts (24) in der betreffenden Aufnahmebuche (20, 70) eine formschlüssige Verbindung zwischen dem ersten und dem zweiten Formschlussmittel (36, 42) herzustellen, sodass der Auflageabschnitt (12, 66) mit der Bodenschiene (4) verbunden ist.

2. Befestigungssystem (2, 69, 89) nach Anspruch 1,
wobei die Aufnahmebuchsen (20, 70) dazu ausgebildet sind, form- und/oder kraftschlüssig mit den Aufnahmeöffnungen (6) verbunden zu werden.

3. Befestigungssystem (2, 69, 89) nach einem der vorhergehenden Ansprüche,
wobei die Aufnahmebuchsen (20, 70) eine Befestigungsöffnung (34) aufweisen, in der das erste Formschlussmittel (36) in Form von ersten Umfangsrillen (36) angeordnet ist, die in Umfangsrichtung in mehrere erste Segmente (38) unterteilt sind, wobei zwischen den ersten Segmenten (38) freie erste Zwischenräume (40) ohne erste Umfangsrillen (36) vorgesehen sind,
wobei der Einsteckabschnitt (24) an einer radial äußeren Oberfläche zweite Umfangsrillen (42) aufweist, die in mehrere zweite Segmente (44) unterteilt sind, wobei zwischen den zweiten Segmenten (44) freie zweite Zwischenräume (46) ohne zweite Umfangsrillen (42) vorgesehen sind, und
wobei die zweiten Segmente (44) dazu dimensioniert sind, axial in die ersten Zwischenräume (40) gesteckt zu werden, um nach anschließender Rotation des Befestigungselements (22, 78, 88) mit den ersten Segmenten (38) eine formschlüssige Verbindung einzugehen.

4. Befestigungssystem (2, 69, 89) nach Anspruch 3,
wobei die mehreren ersten Segmente (38) und die mehreren zweiten Segmente (44) jeweils zwei, drei oder mehr erste bzw. zweite Segmente (38, 44) umfassen.

5. Befestigungssystem (2, 69, 89) nach Anspruch 3 oder 4,
wobei die ersten Umfangsrillen (36) und die zweiten Umfangsrillen (42) keine Steigung aufweisen.

6. Befestigungssystem (2, 69, 89) nach einem der vorhergehenden Ansprüche,
wobei das Befestigungselement (22, 78, 88) einen von dem Einsteckabschnitt (24) beabstandeten Kragen (28) aufweist, der flächig mit dem Auflageabschnitt (12, 66) in Kontakt bringbar ist.

7. Befestigungssystem (2, 69, 89) nach einem der vorhergehenden Ansprüche,
wobei der Auflageabschnitt (12, 66) an einem Beschlag (10) angeordnet ist, der mit dem Einbauelement (48, 68) verbindbar ist.

8. Befestigungssystem (2, 69, 89) nach einem der vorhergehenden Ansprüche, ferner aufweisend mindestens ein fluiddichtes, elastisches Abdeckelement (30), das auf Aufnahmebuchsen (20, 70) und/oder Aufnahmeöffnungen (6) aufbringbar ist, die frei von Befestigungselementen (22, 78, 88) sind.

9. Befestigungssystem (2, 69, 89) nach Anspruch 1,
wobei die Aufnahmebuche (20, 70) eine Spreizbuchse (70) ist, die sich durch Einstecken des Befestigungselements (22, 78, 88) in eine Einstecköffnung (87) aufweitet und in einem vollständig aufgeweiteten Zustand mit dem Befestigungselement (22, 78, 88) verrastet.

10. Befestigungssystem (2, 69, 89) nach Anspruch 9,
wobei die Aufnahmebuchse (70) mehrere Umfangssegmente (74) mit jeweils einem freien Ende (76) aufweist,
wobei die freien Enden (76) von der Einstecköffnung (87) beabstandet sind, und
wobei die freien Enden (76) jeweils einen radial nach außen ragenden Vorsprung (72) aufweisen, der bei in einer Aufnahmeöffnung (6) eingesteckter Aufnahmebuchse (70) bei eingestecktem Befestigungselement (22, 78, 88) mit einer korrespondierenden Fläche der Bodenschiene (4) in Kontakt gerät, sodass die Aufnahmebuchse (70) in der Aufnahmeöffnung (6) gehalten wird.

11. Befestigungssystem (2, 69, 89) nach einem der vorhergehenden Ansprüche, wobei das mindestens eine Befestigungselement (22, 78, 88) eine Öse (90, 92) zum Verzurren von Ladung aufweist.

12. Flugzeug (94), aufweisend einen Rumpf (96), eine darin ausgebildete Passagierkabine (98) mit einem Fußboden (47) und mindestens einem Befestigungssystem nach einem der vorhergehenden Ansprüche.

13. Flugzeug (94) nach Anspruch 12, wobei das Einbauelement ein Passagiersitz, eine Passagiersitzgruppe, ein Kabinenmonument, eine Trennwand, und/oder ein Flugbegleitersitz ist.
